# EUROPEAN PATENT SPECIFICATION

(11) **EP 1 588 058 B1**
(45) Date of publication and mention of the grant of the patent: **03.01.2007**
(21) Application number: 04703549.8
(22) Date of filing: 20.01.2004
(51) Int. Cl.: F15B 11/12

(54) **CONTROL UNIT FOR A PNEUMATIC ACTUATOR OPERATING A ROOF SMOKE EXTRACTOR FLAP**
STEUEREINHEIT EINES PNEUMATISCHEN STELLGLIEDS ZUR BETÄTIGUNG EINER RAUCHABZUGKLAPPE
UNITE DE COMMANDE POUR UN ACTIONNEUR PNEUMATIQUE ACTIONNANT UN VOLET D'EXTRACTEUR DE FUMEE MONTE SUR UN TOIT

(30) Priority: 20.01.2003 PL 35834203
(43) Date of publication of application: 26.10.2005
(73) Proprietor: Rothgangl, Erhard, 93600 Aulnay sur Bois (FR)
(72) Inventor: Rothgangl, Erhard, 93600 Aulnay sur Bois (FR)
(74) Representative: Kacperski, Andrzej
(86) International application number: PCT/PL2004/000002
(87) International publication number: WO 2004/066043

(56) References cited:
- EP-A- 0 465 301
- EP-A- 0 962 236
- WO-A-97/33062
- DE-A- 19 820 389
- DE-C- 4 312 581
- FR-A- 1 402 736
- GB-A- 994 675

## Description

The subject of the invention is a control unit for a pneumatic actuator operating a smoke extractor flap installed on a roof. In normal operation, the smoke extractor flap serves venting, and in case of a fire, it is to remove smoke.

Designs of smoke extractor flaps operated by a pneumatic actuator supplied by a two-pressure system are known. When ventilating, the actuator is supplied with air of a lower pressure, controlled by a directional distribution valve. In case of a fire, full opening of the smoke flap occurs manually or automatically, the higher-pressure operation superseding. A sensor signal switches over the system to supply with higher-pressure gas - mostly CO₂, when exceeding the limit temperature or the presence of smoke is detected.

The smoke flap is driven by a pneumatic actuator with the intermediary of a kinematic system, as in an example presented in the description of the international patent application WO97/33062, or in the Polish utility model application W-109863. In open position, the flap is blocked mechanically in order to avoid closure by wind thrust. The system can be supplied with gas of a higher pressure, using a device piercing the closure of a pressure vessel, e.g. as shown in the design presented in the Polish utility model application W-108238.

The hitherto existing designs of systems controlling smoke flaps are characterized by the two-position feature, imposed by the specifics of pneumatic actuator drive, the elasticity of the medium, and uneven pressure surface areas on the piston and piston rod sides of the actuator. Ventilation with the flap-fully open is unwelcome, as in case of atmospheric precipitation the delay in closing the flap results in wetting the vented room.

Known pneumatic driving systems include also designs enabling intermediate piston positions. E.g., a pneumatic actuator control system of a manipulating device, presented in the Polish patent application P-287410, has a pressure controller incorporated in the branch feeding the piston side of the actuator. The controller limits the pressure to a value compensating the thrust forces on both sides of the piston. The intermediate position of the piston is achieved by cutting off both side chambers of the actuator by the distribution valve. In such a device, the intermediate position of the piston is unstable, especially when the external forces are of undetermined intensity.

The aim of the invention is making it possible to open the flap to an intermediate position, and stabilizing it in that position by pneumatic locking, while keeping the possibility of immediate full opening. The invented device applies separate control of full opening and closing of the smoke flap, and partial opening and closing at a determined intermediate angle position.

The unit according the invention consists of a four-way controlling distributor valve with a directional slide moved by a lever mechanism, which is connected with the smoke flap. In the cylindrical bore of the distributor body there is, beside the directional slide, a second smoke removal slide. Along the stroke length of the directional slide are located passages connected with the interior of the body bore, in order towards the smoke removal slide: the piston passage, the directional opening passage, and the piston rod passage. The directional slide has an external piston and an internal piston, interconnected by a necking of lesser diameter and a length longer than the spacing between the piston passage and piston rod passage. The length of external piston is greater than the spacing between the piston passage and directional opening passage. The smoke removal slide has a piston and a buffer of lesser diameter on the end towards the directional slide. The bore of the body in the zone closed by the bore bottom and the smoke removal slide is connected with the passage of the smoke removal signal. The directional closing passage is connected with the bore of body of the controlling distribution valve in the stroke zone of the smoke removal slide, between the end positions of both slides.

The presented design of the control distributor valve makes it possible during ventilation - while being fed by a lower-pressure gas - to stop and pneumatically lock the actuator piston rod at a selected intermediate position. That task is being realized on the principle of pressure equalizing on both sides of the actuator piston and by cutting-off these spaces at a selected intermediate position, in joint operation of the control distributor with the lever mechanism.

It is advantageous to incorporate additionally a pressure relief valve in the control distributor body, which in case of fire is switched over when fed by a higher-pressure gas. The chamber of the pressure relief valve closed by a springloaded piston communicates with the directional opening passage. In the body wall, in its zone covered by the piston, there is a hole to the smoke removal passage.

A design is also advantageous, in which the directional slide has on one end a bore, and the smoke removal slide, on the buffer side, has a concentric mandrel, which is sliding in that bore of the directional slide.

A development of the invention concerns a particular design of the lever mechanism, characterized by levers with bearings on separate axles, one lever being single-armed and the second double-armed, and the levers being interconnected by a cam mechanism. The cam mechanism consists of a roller on the end of one arm of the lever, and of a guiding curved opening made in the lever connected with smoke flap. The second arm of the lever is pressed by a spring to the push rod of the directional slide in the controlling distribution valve. The single-arm lever spring is tensioned towards the smoke flap.

The guiding curved hole in the single-arm lever has a shape with four characteristic roller position points, at which the corresponding positions of the second arm of the lever and the lever mechanism determine specific connections in the controlling distribution valve. In the first point, the directional closing passage is connected with the piston rod passage and the directional opening passage with the piston passage; in the second, the directional opening passage is connected both with the piston passage and piston rod passage; in the third, the directional opening passage is connected with piston rod passage, and in the fourth - all passages are closed.

The lever mechanism has also a roller guide moving on the axis of flap lever arm. The guide is provided with a spring pulling it to a position limited by a stop, at which position the race of the guide connects the first specific point with the second specific point of the curved guiding opening.

The described design of the lever mechanism coupled with the cam mechanism forces switching-over the controlling distribution valve to tend keeping the smoke flap steadily in the selected intermediate venting position, in spite of varying wind pressure conditions.

At the same time, the system is still ready to open automatically the smoke flap completely, when admitting compressed gas of higher pressure. Such operation of the smoke flap in the event of higher pressure has always priority.

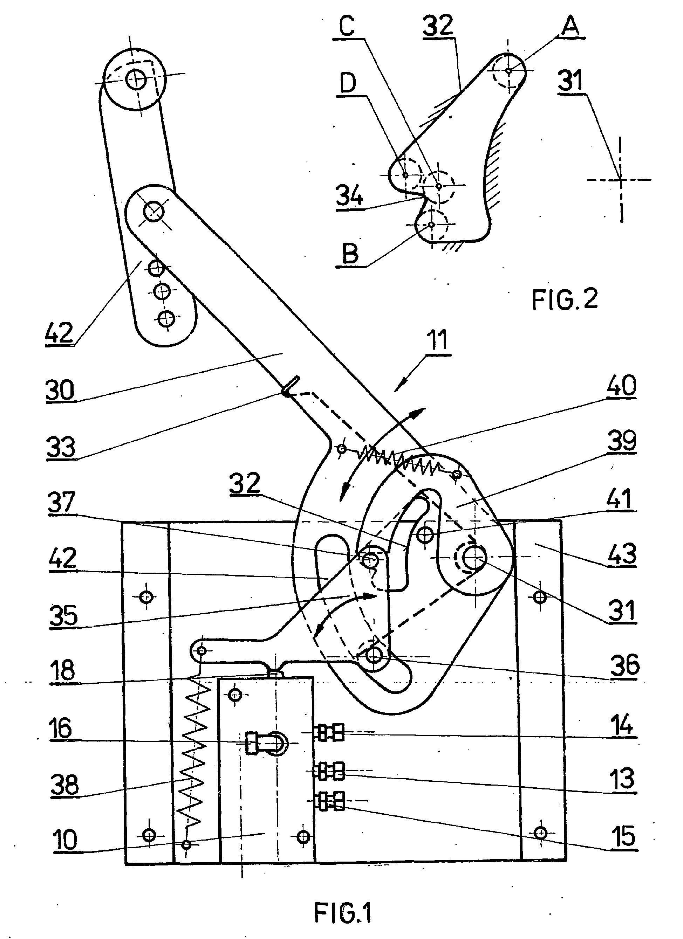

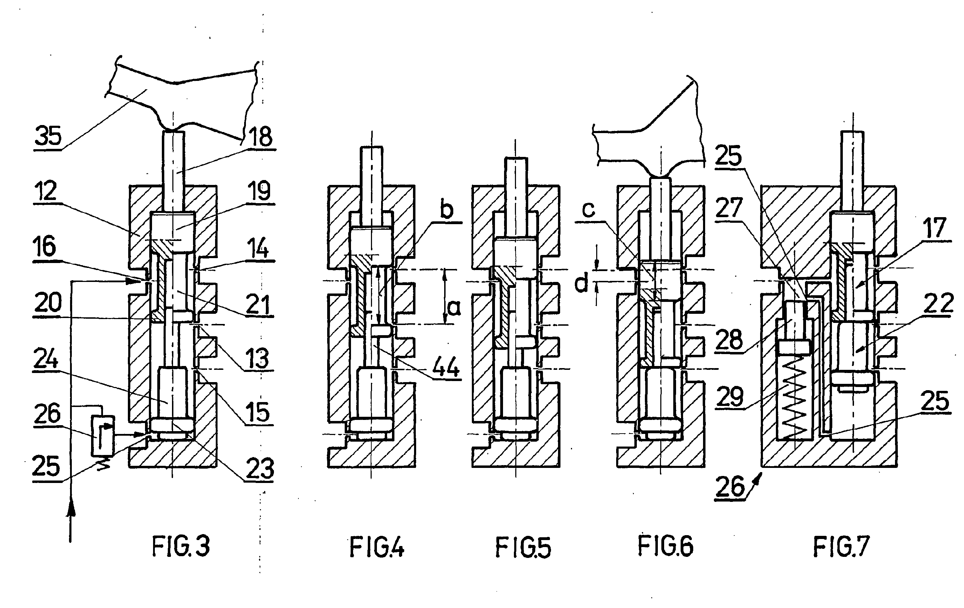

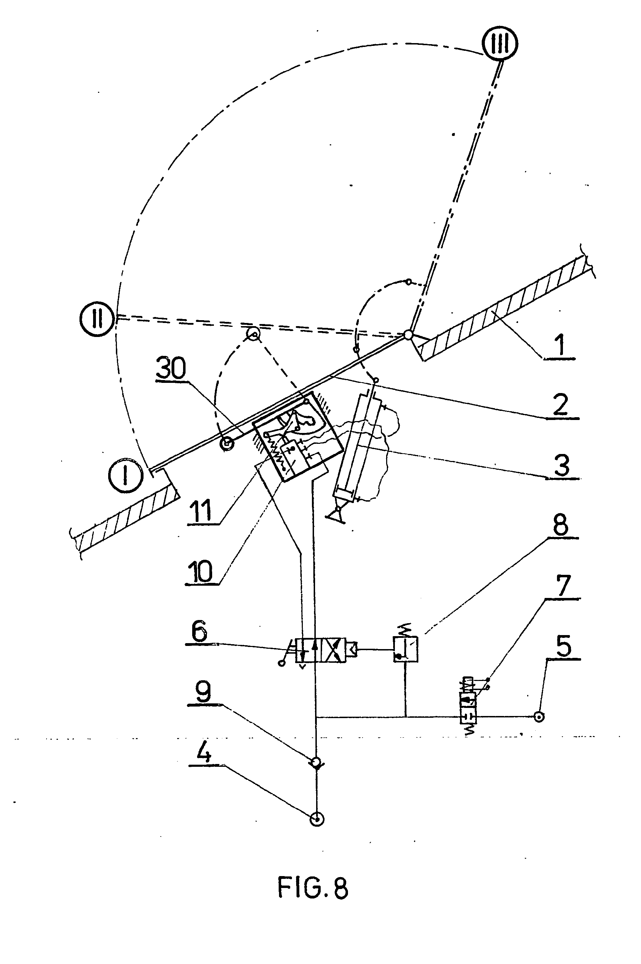

Full understanding of the invention in made easier by the description of an exemplifying realization of the control unit. It is shown in front view in Fig. 1 in free position, i.e. without contact of the lever with the smoke flap. The next diagrams show: Fig. 2 - the shape of the curved guiding opening in the lever connected with the smoke flap and Figures 3 to 7 - sections through the controlling distribution valve in functionally specific positions. In Fig. 3, the slides are in the closed smoke flap position or at the beginning of its opening. Figs. 4 and 5 show the consecutive slide positions when approaching the determined intermediate location of the flap, Fig. 6 - the position when the pneumatic actuator is locked in the determined venting position, and Fig. 7 - the slide positions for smoke removal, when supplying the unit with higher-pressure gas. Fig. 3 shows additionally the connection of the pressure relief valve when it is made separate from the controlling distribution valve, while Fig 7 - when the pressure relief valve is incorporated in the controlling distribution valve; its elements are shown in that instance in positions corresponding to a fire situation. Fig. 8 depicts schematically the installation of the invented unit with the gas supply and smoke flap control systems.

The unit includes a four-way controlling distribution valve 10, which is kinematically connected, over the lever mechanism 11, with the smoke flap cover 2. In the cylindrical bore of the body 12 of the controlling distributor valve 10 are placed two slides - the directional slide 17 and the smoke removal slide 22.

In the body 12 of the distributor valve 10, in the stroke zone of the directional slide 17 are located, successively towards the smoke removal slide 22, the following passages connected with the bore of body 12: the piston passage 14, the directional opening passage 16, and the piston rod passage 13.

The directional slide 17 has an external piston 19 and an internal piston 20 connected by the necking 21 of lesser diameter, the length b of which is greater than the distance a between the piston passage 14 and the piston rod passage 13. The length c of the external piston 19 is greater than the spacing d between the piston passage 14 and the directional opening passage 16. The directional slide 17 has on one end a bore and on the second end a push rod 18 protruding out of the body 12 of the controlling distribution valve 10. The push rod 18 is pressed down by the lever 35 of the lever mechanism 11.

The smoke removal slide 22 has a piston 23 and a buffer 24 of lesser diameter. The buffer 24 is located at the side of the directional slide 17 and has a coaxial mandrel 44 sliding in the bore of the directional slide 17. The bore in body 12, in the zone closed by the bottom of that bore and the piston 23 of the smoke-removal slide 22, is connected with the smoke-removal signal passage 25.

In the stroke zone of the buffer 24 of the smoke-removal slide 22, between the end positions of slides 17 and 22, the bore of the body 12 is connected with the directional closing passage 15, which, not being covered by the pistons of the slides 17 and 22, is constantly open.

The version shown in Fig. 7 has a pressure relief valve 26 incorporated in the body 12 of the controlling distribution valve 10. The chamber 27 of the pressure relief valve 26 has a connection with the directional opening passage 16, which is closed by the piston 28 pressed by the spring 29. In the zone covered by the piston 28 there is a hole in the body 12, which connects the chamber 27 with the smoke-removal signal passage 25. The location of the hole is selected depending on the pressure value of the higher-pressure gas, the area of the piston 28, and characteristics of the spring 29. During venting phases, when fed by a lower-pressure gas, that hole is covered by the piston 28.

The controlling directional valve 10 and the lever mechanism 11 are fixed to the base 43 having mounting set-offs on opposite sides. The lever mechanism 11 is provided with two levers - the single-armed lever 30 and the double-armed lever 35, moving on separate axles 31 and 36. The levers 30 and 35 are connected by a cam mechanism consisting of the roller 37 set at end of one arm of the lever 35, and of the curved guiding opening 32 leading it, made in the single-arm lever 30. The second arm of the lever 35 is pressed down by the spring 38 to the push rod 18 of the controlling distribution valve 10. The single-armed lever 30 is pushed towards the smoke flap cover 2 by the spring 33, which is wound around axle 31, and rests at its other end on the axle 36. The lever 30 has on its end the arm 42 and a roller being in rolling contact with the smoke flap cover 2. The adjustable connection of the arm 42 with the lever 30 enables accurate adjustment of the articulated connection based on leverage, cams, and pneumatics.

The single-armed lever 30 is provided with a curved guiding opening 32, the shape of which has four specific points A, B, C, and D. The position of roller 37 in these points, and the corresponding position of the second arm of the lever 35, determines the location of the directional slide 17 and proper connections of passages in the controlling distribution valve 10.

At the first point A - corresponding to position I and closed smoke flap cover 2, the lever 30 is turned to the left by approximately 45° from the situation shown in Fig. 1. In that position of the lever 30, the slides 17 and 22 of the controlling distribution valve 10 are situated as shown in Fig. 3, at which situation the directional closing passage 15 is connected with the piston rod passage 13, and the directional opening passage 16 is connected with the piston passage 14.

In the second position B, occurring when the smoke flap cover 2 is being opened in ventilating conditions, in which the smoke flap approaches and has not yet reached the venting position II - the directional slide 17 is moved to the position shown in Fig. 4. In that position, the directional opening passage 16 is connected both with the piston passage 14 and with the piston rod passage 13. Both chambers of the pneumatic actuator 3 are fed by gas of the same lower pressure, but, due to the different areas of the piston in the piston chamber and the piston rod chamber, the smoke flap 2 is moved further up.

In the third point C, the movement of the smoke flap cover 2, transmitted by the lever mechanism 11, causes further moving of the directional slide 17 to the position shown in Fig. 5, at which only the piston rod chamber of the pneumatic actuator 3 stays under compressed air. The only connection is that of the directional opening passage 16 with the piston rod passage 13.

In the fourth point D, at which the smoke flap cover 2 reached the venting position II, the pressure forces on both sides of the pneumatic actuator piston 3 equalize, i.e. the pressure difference in these chambers corresponds to the lesser thrust surface on piston rod side. The slides of the controlling distribution valve 10 assume positions shown in Fig. 6, at which all passages are cut-off from supply.

In the described design, the location of the second point B, the third point C, and the fourth point D form a tooth 34 on the operating edge of the curved guide opening 32.

The above-described sequential course of control, including the task to keep the smoke flap cover 2 in an intermediate venting position, is implemented by fitting the single-arm lever 30 with a guide piece 39 for the roller 37. During the phase of opening the smoke flap cover 2, with the roller being on the segment between the specific points A and B, the guide piece 39 covers partly the curved guide opening 32, taking over its function as a cam. The guide piece 39 moves on the axle 31 of lever 30. The operating surfaces of the guiding piece 39 and the curved guiding opening 32 between points A and B are drawn on a radial arc centered at the axle 31; the difference of radii lengths exceeds slightly the diameter of roller 37.

The guiding piece 39 is connected with the spring 40 attached to the lever 30, pulling it towards the position limited by the stop 41, which determines the starting position of the guide piece 39, imposing the trajectory of roller 37 between the first point A and the second point B.

Fig. 8 shows diagrammatically the assembly of the control and drive system of the smoke flap cover 2 with the control unit according the invention. The smoke flap with the cover 2 operated by the pneumatic actuator 3 is mounted on the inclined surface of the roof 1. The diagram does not show the lever mechanism raising and guiding the cover 2 of the flap, limiting the details to indicate the kinematic systems as simply as possible.

The base 43 of the control unit according the invention is fixed to the stationary frame of the smoke flap cover 2, fastened to the roof structure 1. The controlling distribution valve 10 is connected by hoses with the pneumatic actuator 3: the piston rod passage 13 with piston rod chamber of the actuator, and respectively the piston passage 14 with the piston chamber. The remaining passages of the controlling distribution valve 10, viz. the directional closing passage 15, and the directional opening passage 16 are connected by rigid pipes with the directional distributing valve 6.

The directional distributing valve 6 is fed in parallel by two compressed gas sources - a lower-pressure source 4 of, by way of an example, compressed air at 6 bar, and a higher-pressure source 5, by way of an example - CO₂ at 10 bar. The lower-pressure gas source 4 is connected continuously and directly with the directional distributing valve 6, while the gas source of higher pressure 5 is connected via a cut-off valve 7 controlled by a smoke removal signal, a temperature sensor signal, or a smoke sensor. The function of the cut-off valve 7, when applying cartridges with compressed CO₂, is played by a device piercing the cover of the vessel, the striker of which is activated by the smoke removal signal.

The line feeding the directional distribution valve 6 from the lower-pressure source 4 has a check valve 9 on its section ahead of the connection point with the line from the higher-pressure gas 5. Switching over the directional distribution valve 6 in case of a fire and required smoke removal can be initiated on pneumatic way by the pressure relief valve 8, or electrically by the detector signal.

Venting is set off by switching over the directional distributing valve 6, which starts swinging open the smoke flap cover 2 from its closed position I to the venting position II. The complete phased action sequence of the control unit, including the controlling distribution valve and the lever mechanism 11, takes place according the described principle of indirect stopping the piston of the air actuator 3 by the unit of the described invention.

Smoke removal in case of a fire requires full, automatic opening of the smoke flap cover 2 to position III at any time, irrespective of its current position. The occurrence of a fire signal or smokiness imparts priority to the operation of the pneumatic actuator 3, feeding it from the higher-pressure gas source 5.

The control unit according this invention can be easily mounted to existing systems with two-position smoke flap operation, turning them into three-position systems with an additional intermediate, venting position of the smoke flap. This does not entail any changes in the existing system of pneumatic supply to the smoke flap.

The invention can also be applied to pneumatic double-acting actuators for other applications.

## Claims

1. Control unit for a pneumatic actuator operating a roof smoke extractor flap, adapted to be fitted in a system between the pneumatic actuator and a directional distribution valve supplied from a two-pressure system operated with supremacy of higher-pressure action, activated by sensor signal, **characterized in that**:
- it consists of a four-way controlling distributor valve (10) with a directional slide (17) moved by a lever mechanism (11) connectable with the smoke flap cover (2) and **in that**
- a second slide, the smoke removal slide (22), is installed beside the directional slide (17) in the cylindrical bore of the body (12) of the controlling distribution valve (10),
- the following passages connected with the bore of the body (12) are provided in the stroke zone of the directional slide (17) in sequence towards the smoke removal slide (22): the piston passage (14), the directional opening passage (16), and the piston rod passage (13),
- the directional slide (17) has an external piston (19) and an internal piston (20) connected by a lesser diameter necking (21) of length (b) longer than the spacing (a) between the piston passage (14) and the piston rod passage (13), and the length (c) of the external piston (19) is greater than the spacing (d) between the piston passage (14) and the directional opening passage (16), while
- the smoke removing slide (22) has a piston (23) and a buffer (24) of lesser diameter on the side of the directional slide (17),
- the inside of the bore in body (12), in the zone closed by the bore bottom and the piston (23) of the smoke removal slide (22), is connected with the smoke-removal signal passage (25), and more over
- the cylindrical bore in the body (12) is connected with a directional closing passage (15) in the stroke zone of the buffer (24) of the smoke removal slide (22), between the end positions of the slides (17, 22).

2. A control unit according to claim 1 **characterized in that** the body (12) of the controlling distribution valve (10) incorporates a pressure relief valve (26) with a chamber (27) connected with the directional opening passage (16), closed by the spring (29) loaded piston (28), that valve having in the zone covered by the piston (28) a passage connected with the smoke removal passage (25).

3. A control unit according to claim 1 **characterized in that** the directional slide (17) has on one side a bore, while the smoke-removal slide (22) has on the buffer (24) side a coaxial mandrel (44) sliding **in that** bore of the directional slide (17).

4. A control unit according to claim 1 **characterized in that** the lever mechanism (11) has a single-arm lever (30) and a double-arm lever (35) moving on separate axles (31, 36), the levers being connected together by a cam mechanism constituted by a roller (27) located at the end of one arm of the double-armed lever (35) and by the curved guiding opening (32) made in the single-armed lever (30), while the second arm of the lever (35) is pressed by the spring (38) to the push rod (18) of the directional slide (17) in the directional distribution valve (10), and the single-armed lever (30) has a spring (33) adapted to pull it to the smoke flap cover (2).

5. A control unit according to claim 4 **characterized in that** the curved guiding opening (32) is of a form having four specific points (A, B, C, D) of the position of roller (37), at which points the corresponding location of the second arm of lever (35) and of the lever mechanism (11) decide upon connections of the passages in the controlling distribution vale (10), so that:
- at the first point (A) the directional closing passage (15) is connected with the piston rod passage (13) and the directional opening passage (16) is connected with the piston passage (14),
- at the second point (B) the directional opening passage (16) is connected both with the piston passage (14) and the piston rod passage (13),
- at the third point (C) the directional opening passage (16) is connected with the piston rod passage (13), and
- at the fourth point (D) all passages are closed.

6. A control unit according to claim 4 **characterized in that** the lever mechanism (11) has a guide piece (39) for the roller (37) swinging on the axle (31) of the lever (30) of the smoke flap cover (2), fitted with the spring (40) pulling it to a position limited by the stop (41), at which position the guide piece (39) of the roller (37) combines the first specific point (A) with the second specific point (B) of the curved guiding opening (32).

## Patentansprüche

1. Kolbensteuereinheit eines pneumatischen Kraftverstärkers zum Rauchklappeantrieb, die zwischen dem pneumatischen Kraftverstärker und dem Richtungsverteiler, welcher mit einem Zweidrucksystem gespeist wird und nach dem Prinzip der Überordnung des höheren Drucks arbeitet, eingebaut ist und durch Signalgeber eingeschaltet wird,
**dadurch gekennzeichnet, dass**:
- sie sich aus einem Vier-Wege-Steuerungsverteiler (10) mit einem Leitschieber (17), welcher durch eine Hebelübersetzung (11), welche mit der Rauchklappe verbunden ist, verlagert wird, zusammensetzt, sowie dass
- in der walzenförmigen Öffnung des Körpers (12) des Steuerungsverteilers (10) außer dem Leitschieber (17) noch ein anderer Entrauchungsschieber (22) eingesetzt wird,
- im Hubbereich des Leitschiebers (17) in Richtung des Entrauchungsschiebers (22) folgende Kanäle nacheinander angeordnet sind: der Kolbenkanal (14), der Leitkanal zum Öffnen (16) und der Kolbenstangenkanal (13),
der Leitschieber (17) mit einem Außenkolben (19) und einem Innenkolben (20) versehen ist, die mit einer Verengung (21) verbunden sind, deren Breite (b) größer als der Maß (a) zwischen dem Kolbenkanal (14) und dem Kolbenstangenkanal (13), und die Breite (c) des Innenkolbens (19) größer als der Maß (d) zwischen dem Kolbenkanal (14) und dem Leitkanal zum Öffnen (16) ist, sowie dass
- der Entrauchungsschieber (22) mit einem Puffer (24), der von Seiten des Leitschiebers (17) angebracht wird, versehen ist, und dem verschlossenen Raum an dessen anderen Seite der Kanal (25) des Entrauchungssignals zugeführt wird, und darüber hinaus
- der walzenförmigen Öffnung des Körpers (12) in der Pufferzone (24) zwischen den Endlagen der Schieber (17, 22) der Leitkanal zum Schließen (15) zugeführt wird.

2. Steuereinheit nach Anspruch 1, **dadurch gekennzeichnet, dass** im Körper (12) des Steuerungsverteilers (10) ein Überdruckventil (26) eingebaut ist, welcher eine Kammer (27) hat, die mit dem Leitkanal zum Öffnen (16) verbunden und mit dem Kolben (28), welcher durch eine Feder (29) belastet wird, verschlossen wird, und in welchem in der durch den Kolben (28) zugedeckten Zone mit einer Öffnung angebracht ist, die in den Kanal (25) des Entrauchungssignals mündet.

3. Steuereinheit nach Anspruch 1, **dadurch gekennzeichnet, dass** auf dem Entrauchungsschieber (22) an der Seite des Puffers (24) ein koaxialer Dorn (44) angebracht ist, der in die Öffnung des Leitschiebers (17) gleitend eingeführt wird.

4. Steuereinheit nach Anspruch 1, **dadurch gekennzeichnet, dass** die Hebelübersetzung (11) die auf getrennten Achsen (31, 36) gelagerten Hebel - einen einarmigen (30) und einen zweiarmigen (35) - hat, die durch eine Nockenübersetzung miteinander verbunden werden, welche sich zusammensetzt aus: einer am Ende des Hebelarms (38) angebrachten Rolle (37) und der sie führenden Nockenöffnung (32), die in dem einarmigen Hebel (30) ausgeführt ist, wobei der zweite Hebelarm (35) durch eine Feder (38) gegen den Stößel (18) des Leitschiebers (17) im Steuerungsverteiler (10) vorgespannt wird, und der einarmige Hebel (30) mit einer Feder (33) versehen ist, die ihn in Richtung Rauchklappe (2) aufspannt.

5. Steuereinheit nach Anspruch 4, **dadurch gekennzeichnet, dass** die Nockenöffnung (32) des Hebels (30) eine Form hat, die durch vier charakteristischen Lagepunkte (A, B, C, D) der Rolle (37) **gekennzeichnet** ist, in denen die entsprechende Anordnung des zweiten Hebelarms (35) und der Übersetzung (11) darüber entscheidet, welche Kanäle im Steuerungsverteiler (10) verbunden werden:
- im ersten Punkt (A) - der Leitkanal zum Schließen (15) mit dem Kolbenstangenkanal (13), und der Leitkanal zum Öffnen (16) mit dem Kolbenkanal (14),
- im zweiten Punkt (B) der Leitkanal zum Öffnen (16) gleichzeitig mit dem Kolbenkanal (14) und dem Kolbenstangenkanal (13),
- im dritten Punkt (C) - der Leitkanal zum Öffnen (16) mit dem Kolbenstangenkanal (13),
- im vierten Punkt (D) werden alle Kanäle abgesperrt.

6. Steuereinheit nach Anspruch 4, **dadurch gekennzeichnet, dass** die Hebelübersetzung (11) eine für die Rolle (37), die um die Achse (31) des Hebels (30) der Rauchklappe (2) schwenkbar gelagert ist, bestimmte Führung (39) hat, welche mit der Feder (40) versehen ist, die sie in eine durch den Puffer (41) begrenzte Lage vorspannt, bei der die Bahn der Führung (39) der Rolle (37) den ersten Punkt (A) und den zweiten (B) charakteristischen Punkt der Nockenöffnung (32) verbindet.

## Revendications

1. Le dispositif de commande du vérin pneumatique à piston, commandant l'exécutoire de désenfumage, installée dans l'installation entre le vérin pneumatique et le distributeur alimenté à partir du système à double pression fonctionnant avec la fonction première de la pression supérieure, déclenché par un signal de détecteurs, **caractérisé en ce que**
- il englobe un distributeur à quatre voies de commande (10) avec le tiroir de distribution (17) actionnée par la transmission à levier (11), reliée à l'exutoire de désenfumage (2) et **caractérisé en ce que**
- dans l'orifice cylindrique du corps (12) du distributeur (10), à part le tiroir de distribution (17) est installé un deuxième tiroir de désenfumage (22),
- dans la zone de la course du tiroir de distribution (17) sont installés, successivement dans la direction du tiroir de désenfumage (22) les canaux: canal à piston (14), canal d'ouverture (16) et canal de la tige (13),
- le tiroir de distribution (17) est muni d'un piston interne (19) et d'un piston externe (20) relié d'un rétrécissement (21) d'une largeur (b) supérieure à la dimension (a) entre le canal à piston (14) et le canal de la tige (13) et la largueur (c) du piston externe (19) est supérieure à la dimension (d) entre le canal à piston (14) et le canal d'ouverture (16), et
- le tiroir de désenfumage (22) est muni du côté du tiroir de distribution (17) d'un tampon (24) et à l'espace fermé de l'autre côté de celui-ci est amené le canal (25) du signal de désenfumage, et, de plus
- dans la course du tampon (24), entre les positionnements extrêmes des tiroirs (17, 22) à l'orifice cylindrique du corps (12) est amené le canal de fermeture (15).

2. Le dispositif de commande selon la revendication 1, **caractérisé en ce que** dans le corps (12) du distributeur (10) est installée une valve de surpression (26), munie d'une chambre (27) reliée au canal d'ouverture (16), fermée par un piston (28) chargé d'un ressort (29) et possédant dans la zone fermée par le piston (28) un orifice qui est relié au canal (25) du signal de désenfumage.

3. Le dispositif de commande selon la revendication 1, **caractérisé en ce que**, du côté du tampon (24), sur le tiroir du désenfumage (22), est exécutée une tige coaxiale (44) glissant dans l'orifice du tiroir de distribution (17).

4. Le dispositif de commande selon la revendication 1, **caractérisé en ce que** la transmission à levier (11) est muni d'un levier du 2^{e} genre (30) et d'un levier du 1^{er} genre (35), installés sur des paliers et sur des axes séparés (31, 36), lesdits leviers étant reliés entre eux par un levier coudé (32) qui est formé par: un galet (37) monté à l'extrémité d'un bras du levier (35) et l'orifice du coude le guidant (32) exécuté dans le levier à un bras (2^{e} genre), et le deuxième bras du levier (35) est serré par le ressort (38) contre le poussoir (18) du tiroir de distribution (17) dans le distributeur (10) et le levier à un seul bras (30) est muni d'un ressort (33) qui le tend vers l'exutoire de désenfumage (2).

5. Le dispositif de commande selon la revendication 4, **caractérisé en ce que** l'orifice du coude (32) du levier (30) a la forme se distinguant par les quatre points caractéristiques (A, B, C, D) du positionnement du galet (37) avec lequel le positionnement du deuxième bras du levier lui répondant (32) et de la transmission (11) décide de la liaison dans le distributeur (10) des canaux:
- dans le premier point (A) du canal de fermeture (15) avec le canal de la tige (13) et du canal d'ouverture (16) avec le canal à piston (14),
- dans le deuxième point (B) du canal d'ouverture -15) simultanément avec le canal à piston (14) et le canal de la tige (13),
- dans le troisième point (C) du canal d'ouverture (16) avec le canal de la tige (13), et
- dans le quatrième point (D) la coupure de tous les canaux.

6. Le dispositif de commande selon la revendication 4, **caractérisé en ce que** la transmission à levier (11) possède un coulisseau (39) du galet (37) installé dans un palier inclinable sur l'axe (31) du levier (30) de l'exécutoire de désenfumage (2), muni d'un ressort (40) la tendant vers la position limitée par le tampon (41); dans cette position la route du coulisseau (39) du galet (37) relie le premier point (A) au deuxième (B) point caractéristique de l'orifice du coude (32).
